# EUROPÄISCHE PATENTSCHRIFT

(11) **EP 0 606 641 B1**
(45) Veröffentlichungstag und Bekanntmachung des Hinweises auf die Patenterteilung: **15.11.1995**
(21) Anmeldenummer: 93120897.9
(22) Anmeldetag: 24.12.1993
(51) Int. Cl.: H02G 7/20

(54) **Hochspannungsleitungssystem**
System of high voltage lines
Système de lignes de haute tension

(30) Priorität: 14.01.1993 AT 44/93
(43) Veröffentlichungstag der Anmeldung: 20.07.1994
(73) Patentinhaber: TIWAG TIROLER WASSERKRAFTWERKE AKTIENGESELLSCHAFT, A-6020 Innsbruck (AT)
(72) Erfinder: Bauhofer, Peter, Dr., A-6250 Breitenbach Nr.308 (AT)
(74) Vertreter: Torggler, Paul, Dr.

(56) Entgegenhaltungen:
- DE-A- 2 650 091
- US-A- 3 647 933

## Beschreibung

Die Erfindung betrifft ein Hochspannungsleitungssystem mit mindestens zwei Gruppen von je drei Leitungen, die an Masten aufgehängt sind, wobei die drei Leitungen einer Gruppe gegeneinander phasenverschobene Wechselströme führen und so angeordnet sind, daß sie zwischen den Masten eine quer zur Leitungsrichtung verlaufende gedachte Ebene an den Eckpunkten eines gedachten Dreiecks schneiden. Weiters betrifft die Erfindung einen Mast für ein solches Hochspannungsleitungssystem.

Hochspannungsleitungen werden im allgemeinen in zwei Gruppen von je drei Leitungen über Masten geführt. Die drei Leitungen führen üblicherweise um 120° phasenverschobene Wechselströme, um insgesamt Drehstromsysteme zu bilden.

Solche Hochspannungsleitungen, die beispielsweise Spannungen von 110 kV bis 380 kV bei Stromstärken von bis zu 2300 A und darüber führen, sind von starken Magnetfeldern umgeben, die zwar mit dem Abstand von den Leitungen abnehmen, jedoch in Bodennähe dennoch beträchtliche Werte annehmen können. Dies ist besonders dort der Fall, wo die Leitungen zwischen zwei Masten am tiefsten durchhängen.

Bei Drehstromsystemen ist die vektorielle Stromsumme im Idealfall gleich Null, sodaß bei einer gedachten Vereinigung aller Leiter auf eine Linie kein Magnetfeld vorhanden wäre. In der Praxis müssen natürlich die drei Leitungen einer Gruppe einen ähnlichen Abstand voneinander aufweisen, was zu einem Restmagnetfeld führt. Es hat sich gezeigt, daß es günstig ist, die Leitungen so anzuordnen, daß sie zwischen den Masten eine quer zur Leitungsrichtung verlaufende gedachte Ebene an den Eckpunkten eines gedachten Dreiecks schneiden. Es sind bereits Masten für Hochspannungsleitungssysteme bekannt, die beiderseits der Mastmitte je eine Gruppe von drei Leitungen aufweisen, die im Dreieck angeordnet sind. Dabei liegen die beiden Gruppen von je drei Leitern beiderseits des Mastes seitlich nebeneinander. Die maximalen Magnetfelder unter einem solchen Hochspannungsleitungssystem sind zwar geringer als bei anderen Masttypen, liegen aber immer noch auf einem Niveau, das in besonders ungünstigen Fällen Lebewesen, insbesondere Menschen, die sich unter der Hochspannungsleitung aufhalten, ungünstig beeinflussen kann. Störend hat sich herausgestellt, daß die maximalen in Bodennähe meßbaren Magnetfelder stark davon abhängen, welche Phasenlage das aus den drei linken Leitungen gebildete Drehstromsystem insgesamt relativ zu dem aus drei Leitungen rechten Drehstromsystem hat. Im allgemeinen Betriebsfall ist nämlich die Phasenlage der beiden Drehstromsysteme nicht zueinander festgelegt, sodaß es bei ungünstiger Phasenlage zu mehr als der doppelten maximalen Magnetfeldstärke in Bodennähe kommen kann.

Aufgabe der Erfindung ist es daher, ein Hochspannungsleitungssystem und einen dafür geeigneten Masttyp zu schaffen, mit dem sich das im Bereich unter dem Hochspannungsleitungssystem in Bodennähe meßbare Magnetfeld gering halten läßt.

Das erfindungsgemäße Hochspannungsleitungssystem geht von einem eingangs genannten Hochspannungsleitungssystem aus und ist dadurch gekennzeichnet, daß im wesentlichen senkrecht oberhalb oder unterhalb jeder dieser Gruppen von je drei Leitungen, mindestens eine weitere solche Gruppe angeordnet ist.

Es sind also immer zumindest zwei solche Gruppen übereinander angeordnet. Im allgemeinen werden bevorzugt zwei Gruppen von je drei Leitungen übereinander angeordnet sein, weshalb im folgenden diese Konfiguration beschrieben wird. Es ist jedoch darauf hinzuweisen, daß grundsätzlich auch mehr als zwei übereinanderliegende Gruppen von je drei Leitungen denkbar und möglich sind.

Durch die erfindungsgemäße Maßnahme erzielt man eine geringere seitliche Ausdehnung des Mastens und damit eine Verkleinerung jenes Bereiches seitlich der Leitungen bzw. Masten, in dem überhaupt relevante Magnetfeldstärken meßbar sind. Die Übereinanderanordnung der Gruppen von je drei Leitungen führt jedoch nicht nur zur Verringerung des räumlichen Bereiches, in dem relevante Magnetfeldstärken meßbar sind, sondern gegenüber Hochspannungsleitungssystemen mit nebeneinanderliegenden Gruppen von je drei Leitungen bei gleichem Bodenabstand der untersten Leitung zu einer wesentlichen Reduktion des maximalen Magnetfeldes. Dies rührt einerseits vom größeren Abstand der weiter oben liegenden Gruppe von je drei Leitungen vom Boden her. Andererseits führt die erfindungsgemäße Leitungsanordnung auch zu einer für die Verringerung der Magnetfeldstärken günstigen vektoriellen Addition der magnetischen Feldvektoren. Insgesamt erzielt man also durch das erfindungsgemäße Hochspannungsleitungssystem bzw. den dafür geeigneten Masttyp eine Reduktion des räumlichen Bereiches, in dem störende Magnetfeldstärken auftreten, und eine wesentliche Reduktion der maximal auftretenden Magnetfeldstärke.

Zwar wurde auch in der DE-OS 23 39 417 ein Hochspannungsleitungssystem gezeigt, bei dem die Leitungen in Gruppen von je drei Leitungen teilweise übereinander angeordnet sind, allerdings wird dabei neben zwei übereinander angeordneten Leitungsgruppen auch eine Gruppe einzeln geführt. Die Grundidee der vorliegenden Erfindung, eine wesentliche Reduktion der Magnetfeldstärke in Bodennähe zu erzielen, wird bei der Leitungsanordnung in der DE-OS 23 39 417 daher nicht erreicht.

Die erfindungsgemäße Leitungsanordnung weist außerdem den Vorteil auf, daß die in Bodennähe maximal meßbare Feldstärke kaum von der relativen Phasenlage des einen aus drei Leitungen bestehenden Drehstromsystems zum anderen aus drei Leitungen bestehenden Drehstromsystem abhängt. Außerdem ermöglicht das neue Hochspannungsleitungssystem eine schmale Trassenbreite, was speziell für Elektrizitätsunternehmen bei der Grundablöse von Vorteil ist.

Weitere Vorteile und Einzelheiten der Erfindung werden in der nachstehenden Figurenbeschreibung erläutert.

Es zeigen:

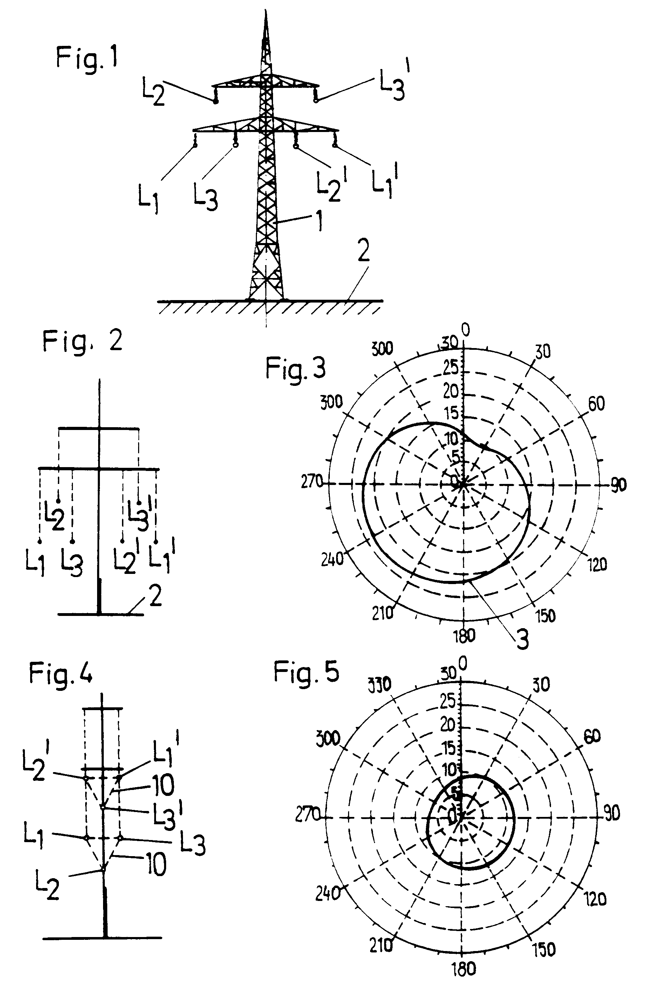

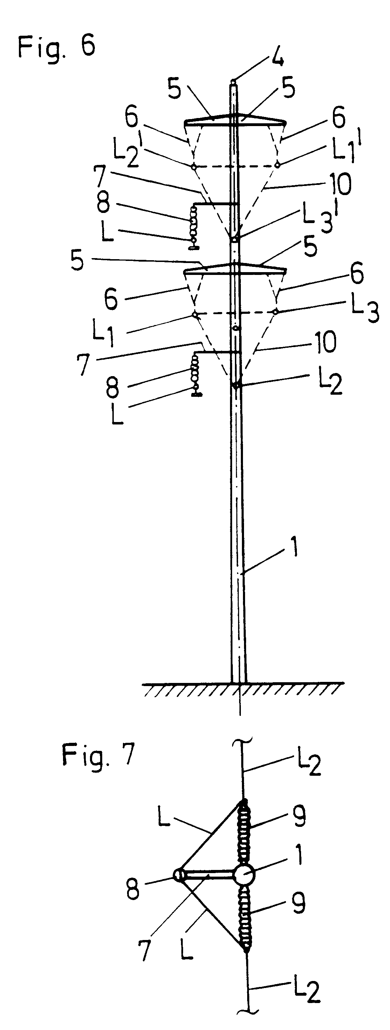

Die Fig. 1 einen Hochspannungsmast nach dem Stand der Technik, die Fig. 2 ebenfalls einen Mast nach dem Stand der Technik, wobei die Leitungen an der Stelle des maximalen Durchhangs (geringster Abstand zum Boden) eingezeichnet sind, die Fig. 3 die maximale effektive Magnetfeldstärke in Bodennähe für einen Masten bzw. ein Hochspannungsleitungssystem gemäß Fig. 2 (Stand der Technik) in Abhängigkeit von der relativen Phasenlage des einen aus drei Leitungen L1, L2, L3 bestehenden Drehstromsystems zum anderen aus drei Leitungen bestehenden Drehstromsystem L1′, L2′, L3′. Die Fig. 4 ein Ausführungsbeispiel eines erfindungsgemäßen Mastes eines erfindungsgemäßen Hochspannungsleitungssystems, wobei die Leitungen an der Stelle des maximalen Durchhangs (geringster Abstand zum Boden) eingezeichnet sind. Die Fig. 5 ein der Fig. 3 entsprechendes Diagramm für den Masten bzw. das Hochspannungsleitungssystem der Fig. 4, die Fig. 6 eine Ausführungsform eines erfindungsgemäßen Mastes und die Fig. 7 eine Draufsicht auf einen erfindungsgemäßen Mast im Bereich einer Umlenkeinrichtung für eine in der gedachten Verlängerung durch die Mastmitte verlaufende Leitung.

Die Fig. 1 zeigt einen herkömmlichen Hochspannungsmast, der auf dem Boden 2 aufsteht. Der Mast weist an seitlichen Auslegern ein erstes Drehstromsystem (erste Gruppe) von drei Leitungen (Phasenseile) L1, L2, L3 auf. Auf der gegenüberliegenden Seite ist ein zweites Drehstromsystem (zweite Gruppe) aus ebenfalls drei Leitungen L1′, L2′, L3′ angeordnet. Die drei Leitungen jeder Gruppe führen gegeneinander phasenverschobene Wechselströme und bilden somit ein Drehstromsystem. Die drei Leitungen jeder Gruppe sind so angeordnet, daß sie zwischen (und bei) den Masten eine quer zur Leitungsrichtung verlaufende gedachte Ebene an den Eckpunkten eines gedachten Dreiecks schneiden. Bei dem in Fig. 1 gezeigten Beispiel sind die Leitungen L1, L2, L3 bzw. L1′, L2′, L3′ in einem mit der Spitze nach oben schauenden gleichseitigen Dreieck angeordnet.

Zwischen den Kasten hängen die Leitungen L1, L2, L3 bzw. L1′, L2′, L3′ bis in die in Fig. 2 gezeigte Stellung durch.

Die Fig. 3 zeigt nun in einem Polardiagramm die an irgendeiner Stelle in einer Höhe von 1 m über dem Boden maximale Magnetfeldstärke in Abhängigkeit von der relativen Phasenlage des Drehstromsystems L1, L2, L3 zum Drehstromsystem L1′, L2′, L3′. Während die Leitungen L1, L2, L3 zueinander im Normalbetrieb eine relative Phasenlage von 120° haben und die Leitungen L1′, L2′, L3′ untereinander ebenfalls eine relative Phasenlage von 120°, ist die Phasenlage des gesamten Drehstromsystems L1, L2, L3 zum anderen Drehstromsystem L1′, L2′, L3′ im allgemeinen Betriebsfall nicht festgelegt. Der Abstand der Linie 3 vom Mittelpunkt der Fig. 3 gibt die in Bodennähe maximal auftretende Magnetfeldstärke unter dem Hochspannungsleitungssystem der Fig. 2 an, und zwar in Abhängigkeit von der relativen Phasenlage des Drehstromsystems L1, L2, L3 zum Drehstromsystem L1′, L2′, L3′, wobei der Außenwinkel als Polarwinkel im Diagramm der Fig. 3 aufgetragen ist. Man sieht in Fig. 3 vor allem, daß die maximale Magnetfeldstärke stark mit dem relativen Phasenwinkel der beiden Drehstromsysteme variiert, der im allgemeinen Betriebsfall nicht festliegt, sodaß man im ungünstigsten Fall mit der mehr als doppelten Magnetfeldstärke zu rechnen hat als im günstigsten Fall.

Erfindungsgemäß wird nun vorgeschlagen, die beiden Gruppen von je drei Leitungen (die beiden Drehstromsysteme) übereinander anzuordnen, wie dies in Fig. 4 gezeigt ist. Das untere Drehstromsystem weist die Leitungen L1, L2, L3, das obere Drehstromsystem L1′, L2′, L3′ auf. In beiden Gruppen bzw. Drehstromsystemen sind die drei Leitungen relativ zueinander gleich angeordnet, nämlich durch die Eckpunkte eines quer zur Leitungsrichtung liegenden gedachten gleichseitigen Dreiecks (in strichlierten Linien eingezeichnet und mit der Bezugsziffer 10 versehen), das allerdings im Gegensatz zum Stand der Technik gemäß den Fig. 1 und 2 mit der Spitze nach unten schaut. Es hat sich herausgestellt, daß diese Dreiecksanordnung zusätzlich zur Übereinanderanordnung der beiden Drehstromsysteme überhaupt noch weitere Vorteile im Hinblick auf ein geringeres Magnetfeld in Bodennähe bringt. Aus Fig. 4 ist ersichtlich, daß beim oberen und unteren Drehstromsystem je zwei Leitungen L1, L2′ bzw. L2, L3′ bzw. L3, L1′ genau vertikal übereinanderliegen. Durch die drei Leitungen einer Gruppe wird bei dem in Fig. 4 gezeigten Mast bzw. Hochspannungsleitungssystem ein Wechselstrom mit jeweils 120° Phasenverschiebung zueinander durchgesandt, um insgesamt zwei Drehstromsysteme zu bilden. Die Wechselstromfrequenz liegt typischerweise unter 100 Hz, vorzugsweise bei 50 Hz oder 60 Hz. Die Stromstärken in allen Leitungen L1, L2, L3 bzw. L1′, L2′, L3′ sind günstigerweise gleich groß.

Mit dem in Fig. 4 gezeigten Hochspannungsleitungssystem erzielt man bei gleichem minimalem Bodenabstand der untersten Leitung wie in Fig. 2 die in Fig. 5 dargestellten Magnetfeldstärken in Abhängigkeit vom relativen Phasenwinkel des einen Drehstromsystems (erste Gruppe L1, L2, L3) zum zweiten Drehstromsystem (zweite Gruppe L1′, L2′, L3′). Vergleicht man die Fig. 5 mit der Fig. 3, so stellt man fest, daß die maximale Magnetfeldstärke unter dem Hochspannungsleitungssystem gemäß der Erfindung wesentlich geringer ist und außerdem nicht so stark vom Phasenwinkel der beiden Drehstromsysteme abhängt.

In Fig. 4 sind die Leitungen L2 und L3′ in der gedachten Verlängerung durch die Mastmitte gezeigt. In Wirklichkeit können diese Leitungen zwar theoretisch auch tatsächlich bei einer speziellen Mastkonstruktion durch die Mastmitte geführt sein. Im allgemeinen wird es jedoch günstiger sein, die Leitungen L2 und L3′ im Bereich des Mastes um den Mast herumzulenken, wie dies in den Fig. 6 und 7 gezeigt ist.

Das in Fig. 6 dargestellte Ausführungsbeispiel eines erfindungsgemäßen Mastes weist oben ein Blitzschutzseil 4 und vier seitliche Ausleger 5 auf, an denen über Isolatoren 6 die Leitungen L1, L3 und L1′, L2′ aufgehängt sind. Die Leitungen L2 und L3′ sind in Fig. 6 schematisch in jener Stellung eingezeichnet, die sie zwischen den Masten einnehmen. In Wirklichkeit werden diese Leitungen im Bereich des Mastes, wie in Fig. 7 gezeigt, um den Mast 1 herumgelenkt. Dazu weist der Mast 1 seitliche Ausleger 7 auf, die über einen Isolator 8 jeweils eine Verbindungsleitung L um den Mast herumführen. Die Verbindungsleitung L verbindet die beiden Leitungsabschnitte L2 in Fig. 7, die zu den jeweils benachbarten Masten führen und die am Mast über zwei Zugentlastungen 9 befestigt sind. Die durch die Umlenkung der Leitungen L2, L3′ im Mast hervorgerufene Abweichung von der idealen Dreiecksanordnung macht sich wegen der Abnahme des Magnetfeldes mit dem Abstand von den Leitungen in Bodennähe nur wenig bemerkbar, da die Leitungen im Bereich des Mastes ohnehin weit höher hängen als im kritischen Bereich des maximalen Leitungsdurchhangs zwischen den Masten.

Die Erfindung betrifft neben dem Hochspannungsleitungssystem auch Masten, die derart ausgebildet sind, daß sie die Leitungen gemäß den Merkmalen des erfindungsgemäßen Hochspannungsleitungssystems führen können, wie dies anhand eines Ausführungsbeispiels in den Fig. 6 und 7 dargestellt ist.

Die Erfindung ist nicht auf die dargestellten Ausführungsbeispiele beschränkt. Insbesondere kann der Mast aus den verschiedensten Materialien gefertigt sein. Die Anordnung der Leitungen einer Gruppe gemäß einem gleichseitigen Dreieck ist zwar ideal, es sind jedoch auch abweichende Anordnungen gemäß einem anderen Dreieck, beispielsweise einem gleichschenkeligen Dreieck durchaus denkbar und möglich. Erfindungswesentlich ist die Tatsache, daß die Gruppen von je drei Leitungen übereinander (genau übereinander oder schräg übereinander) angeordnet sind. Auch ist die Zahl der Gruppen von je drei Leitungen nicht auf die in den Ausführungsbeispielen dargestellte Zahl 2 beschränkt. Vielmehr sind auch Hochspannungsleitungssysteme mit mehr als zwei Gruppen von je drei Leitungen durchaus denkbar und möglich. Das erfindungsgemäße Hochspannungsleitungssystem kann grundsätzlich in allen Spannungsebenen eingesetzt werden, typischerweise im Bereich von 10 kV und darüber, vorzugsweise zwischen 110 kV und 380 kV.

## Patentansprüche

1. Hochspannungsleitungssystem mit mindestens zwei Gruppen von je drei Leitungen (L1, L2, L3 bzw. L1′, L2′, L3′), die an Masten (1) aufgehängt sind, wobei die drei Leitungen einer Gruppe gegeneinander phasenverschobene Wechselströme führen und so angeordnet sind, daß sie zwischen den Masten (1) eine quer zur Leitungsrichtung verlaufende gedachte Ebene an den Eckpunkten eines gedachten Dreiecks (10) schneiden, dadurch gekennzeichnet, daß im wesentlichen senkrecht oberhalb oder unterhalb jeder dieser Gruppen von je drei Leitungen, mindestens eine weitere solche Gruppe angeordnet ist.

2. Hochspannungsleitungssystem nach Anspruch 1, dadurch gekennzeichnet, daß in an sich bekannter Weise die drei Leitungen (L1, L2, L3) in jeder Gruppe relativ zueinander gleich angeordnet sind wie die drei Leitungen (L2′, L3′, L1′) der anderen Gruppe(n).

3. Hochspannungsleitungssystem nach Anspruch 1 oder Anspruch 2, dadurch gekennzeichnet, daß in an sich bekannter Weise die Leitungen (L1, L2, L3 bzw. L1′, L2′, L3′) zumindest einer Gruppe durch die Eckpunkte eines quer zur Leitungsrichtung liegenden, gedachten Dreiecks (10) verlaufen, das mit einer Spitze nach unten weist.

4. Hochspannungsleitungssystem nach einem der Ansprüche 1 bis 3, dadurch gekennzeichnet, daß das gedachte Dreieck (10) aller Gruppen wie an sich bekannt gleichschenkelig, vorzugsweise gleichseitig ist.

5. Hochspannungsleitungssystem nach einem der Ansprüche 1 bis 4, dadurch gekennzeichnet, daß in an sich bekannter Weise die Effektivwerte der Stromstärken in allen Leitungen (L1, L2, L3 bzw. L1′, L2′, L3′) einer Gruppe gleich sind.

6. Hochspannungsleitungssystem nach einem der Ansprüche 1 bis 5, dadurch gekennzeichnet, daß in an sich bekannter Weise die Effektivwerte der Spannungen in allen Leitungen (L1, L2, L3 bzw. L1′, L2′, L3′) einer Gruppe gleich sind und im Bereich von 10 kV und darüber, vorzugsweise zwischen 110kV und 380kV liegen.

7. Hochspannungsleitungssystem nach einem der Ansprüche 1 bis 6, dadurch gekennzeichnet, daß die Wechselstromfrequenz in an sich bekannter Weise unter 100 Hz, vorzugsweise bei 50Hz oder 60Hz liegt.

8. Hochspannungsleitungssystem nach einem der Ansprüche 1 bis 7, dadurch gekennzeichnet, daß in an sich bekannter Weise die Wechselströme in den drei Leitungen (L1, L2, L3 bzw. L1′, L2′, L3′) einer Gruppe im Normalbetrieb jeweils um 120° gegeneinander phasenverschoben sind.

9. Mast zur Führung von Leitungen eines Hochspannungsleitungssystems nach einem der Ansprüche 1 bis 8, dadurch gekennzeichnet, daß der Mast (1) für jede Gruppe von drei Leitungen (L1, L2, L3 bzw. L1′, L2′, L3′) einen ersten seitlichen Ausleger (5), an dem die erste Leitung (L1, L2′) der Gruppe über zumindest einen Isolator (6) aufgehängt ist, und auf der gegenüberliegenden Seite des Mastes (1) einen zweiten Ausleger (5) aufweist, an dem die zweite Leitung (L3, L1′) der Gruppe über zumindest einen Isolator (6) aufgehängt ist, und daß die dritte Leitung (L2, L3′) der Gruppe in der gedachten Verlängerung durch die Mastmitte verläuft, die dritte Leitung (L2, L3′) bzw. eine damit verbundene Verbindungsleitung (L) tatsächlich aber durch eine Isolatoren (8, 9) umfassende Umlenkeinrichtung im Bereich des Mastes um diesen herumgeführt ist.

10. Mast nach Anspruch 9, dadurch gekennzeichnet, daß die am Mast (1) befestigte Umlenkeinrichtung zwei Zugentlastungen (9) für die beiderseits des Mastes (1) zu den benachbarten Masten führenden Leitungsabschnitte (L2), sowie einen seitlichen Ausleger (7) umfaßt, an dem über zumindest einen Isolator (8) eine die beiden Leitungsabschnitte (L2) verbindende Verbindungsleitung (L) um den Mast (1) herumgeführt ist.

## Claims

1. A high-voltage line system with at least two groups each of three lines (L1, L2, L3 and L1′, L2′, L3′) which are suspended on pylons (1), wherein the three lines of a group carry alternating currents which are phase-shifted relative to each other, and are so arranged that between the pylons (1) they intersect a notional plane extending transversely to the line direction at the corner points of a notional triangle (10) characterised in that disposed substantially perpendicularly above or beneath each of said groups each of three lines is at least one further such group.

2. A high-voltage line system according to claim 1 characterised in that in per se known manner the three lines (L1, L2, L3) in each group are arranged relative to each other in the same way as the three lines (L2′, L3′, L1′) of the other group or groups.

3. A high-voltage line system according to claim 1 or claim 2 characterised in that in per se known manner the lines (L1, L2, L3 or L1′, L2′, L3′) of at least one group extend through the corner points of a notional triangle (10) which is disposed transversely to the line direction and which faces with a tip downwardly.

4. A high-voltage line system according to one of claims 1 to 3 characterised in that the notional triangle (10) of all groups is, as is known per se, an isosceles triangle, preferably an equilateral triangle.

5. A high-voltage line system according to one of claims 1 to 4 characterised in that in per se known manner the effective values of the current strengths in all lines (L1, L2, L3 or L1′, L2′, L3′) of a group are the same.

6. A high-voltage line system according to one of claims 1 to 5 characterised in that in per se known manner the effective values of the voltages in all lines (L1, L2, L3 or L1′, L2′, L3′) of a group are the same and are in the range of 10 kV and above, preferably between 110 kV and 380 kV.

7. A high-voltage line system according to one of claims 1 to 6 characterised in that in per se known manner the alternating current frequency is below 100 Hz and is preferably 50 Hz or 60 Hz.

8. A high-voltage line system according to one of claims 1 to 7 characterised in that in per se krown manner the alternating currents in the three lines (L1, L2, L3 or L1′, L2′, L3′) of a group are in normal operation each phase-shifted relative to each other through 120°.

9. A pylon for carrying lines of a high-voltage line system according to one of claims 1 to 8 characterised in that the pylon (1) has for each group of three lines (L1, L2, L3 or L1′, L2′, L3′) a first lateral outrigger (5) on which the first line (L1, L2′) of the group is suspended by way of at least one insulator (6), and on the opposite side of the pylon (1) has a second outrigger (5) on which the second line (L3, L1′) of the group is suspended by way of at least one insulator (6), and that the third line (L2, L3′) of the group extends on the notional prolongation through the middle of the pylon, but the third line (L2, L3′) or a connecting line (L) connected thereto is actually passed around the pylon by a deflection means including insulators (8, 9) in the region of the pylon.

10. A pylon according to claim 9 characterised in that the deflection means which is fixed to the pylon (1) includes two tensile load-relieving means (9) for the line portions (L2) which lead on both sides of the pylon (1) to the adjacent pylons, and a lateral outrigger (7) at which a connecting line (L) connecting the two line portions (L2) is passed around the pylon (1) by way of at least one insulator (8).

## Revendications

1. Système de lignes à haute tension comportant au moins deux groupes de chacun trois lignes (L1, L2, L3 ou L1′,L2′,L3′), qui sont suspendues à des pylônes (1), les trois lignes d'un groupe véhiculant des courants alternatifs réciproquement déphasés et étant disposées de telle sorte qu'elles recoupent, entre les pylônes (1), un plan imaginaire, qui s'étend transversalement par rapport à la direction des lignes, au niveau des sommets d'un triangle imaginaire (10), caractérisé en ce que essentiellement perpendiculairement et au-dessus ou au-dessous de chacun de ces groupes comportant chacun trois lignes, est disposé au moins un autre groupe de ce type.

2. Système de lignes à haute tension selon la revendication 1, caractérisé en ce que, de façon connue en soi, les trois lignes (L1, L2, L3) de chaque groupe sont disposées les unes par rapport aux autres de la même manière que les trois lignes (L2′,L3′,L1′) du ou des autres groupes.

3. Système de lignes à haute tension selon la revendication 1 ou 2, caractérisé en ce que d'une manière connue en soi, les lignes (L1,L2,L3 ou L1′,L2′,L3′) d'au moins un groupe passent par les sommets d'un triangle imaginaire (10), qui s'étend transversalement par rapport à la direction des lignes et dont la pointe est tournée vers le bas.

4. Système de lignes à haute tension selon l'une des revendications 1 à 3, caractérisé en ce que le triangle imaginaire (10) de tous les groupes est, de façon connue en soi, un triangle isocèle et de préférence un triangle équilatéral.

5. Système de lignes à haute tension selon l'une des revendications 1 à 4, caractérisé en ce que, de façon connue en soi, les valeurs efficaces des intensités des courants dans toutes les lignes (L1,L2,L3 ou L1′,L2′,L3′) d'un groupe sont égales.

6. Système de lignes à haute tension selon l'une des revendications 1 à 5, caractérisé en ce que, de façon connue en soi, les valeurs efficaces des tensions dans toutes les lignes (L1,L2,L3 ou L1′,L2′,L3′) d'un groupe sont égales et se situent dans la gamme de 10 kV et plus et de préférence entre 110 kV et 380 kV.

7. Système de lignes à haute tension selon l'une des revendications 1 à 6, caractérisé en ce que la fréquence du courant alternatif est, de façon connue en soi, inférieure à 100 Hz et, de préférence, égale à 50 Hz ou 60 Hz.

8. Système de lignes à haute tension selon l'une des revendications 1 à 7, caractérisé en ce que de façon connue en soi, les courants alternatifs des trois lignes (L1,L2,L3 ou L1′,L2′,L3′) d'un groupe sont, dans le fonctionnement normal, respectivement déphasés réciproquement de 120°.

9. Pylône pour le guidage de lignes d'un système de lignes à haute tension selon l'une des revendications 1 à 8, caractérisé en ce que le pylône (1) pour chaque groupe de trois lignes (L1,L2,L3 ou L1′,L2′,L3′) possède un premier bras en console latéral (5), auquel la première ligne (L1,L2′) du groupe est suspendue par l'intermédiaire d'au moins un isolateur (6), et, sur le côté opposé du pylône (1), un second bras en console (5), auquel la seconde ligne (L3,L1′) du groupe est suspendue par l'intermédiaire d'au moins un isolateur (6), et que la troisième ligne (L2,L3′) du groupe passe, selon un prolongement imaginaire, par le centre du pylône, la troisième ligne (L2,L3′) ou une ligne de liaison (L) reliée à cette ligne, étant cependant guidée autour du pylône par un dispositif de déviation, qui comprend des isolateurs (8,9), au voisinage du pylône.

10. Pylône selon la revendication 9 , caractérisé en ce que le dispositif de déviation fixé sur le pylône (1) comprend deux dispositifs de détente de traction (9) pour les sections de ligne (L2), qui aboutissent, des deux côtés du pylône (1), aux pylônes voisins, ainsi qu'un bras en console latéral (7), sur lequel une ligne de liaison (L), qui relie les deux sections de ligne (L2), est guidée autour du pylône (1) par l'intermédiaire d'au moins un isolateur (8).
